# EUROPEAN PATENT SPECIFICATION

(11) **EP 4 495 422 B1**
(45) Date of publication and mention of the grant of the patent: **06.05.2026**
(21) Application number: 23770473.9
(22) Date of filing: 03.03.2023
(51) Int. Cl.: F03D 80/30, F03D 1/06

(54) **RECEPTOR FOR BLADE OF WIND POWER GENERATION DEVICE**
AUFNAHME FÜR SCHAUFEL EINER WINDENERGIEERZEUGUNGSVORRICHTUNG
RÉCEPTEUR POUR PALE DE DISPOSITIF DE PRODUCTION D'ÉNERGIE ÉOLIENNE

(30) Priority: 17.03.2022 JP 2022042936
(43) Date of publication of application: 22.01.2025
(73) Proprietor: Meidensha Corporation, Tokyo 141-6029 (JP)
(72) Inventor: ISHIKAWA, Keita, Tokyo 141-6029 (JP); MEGURO, Sae, Tokyo 141-6029 (JP); SUWA, Akihiro, Tokyo 141-6029 (JP); KAGETA, Soshi, Tokyo 141-6029 (JP)
(74) Representative: Manitz Finsterwald Patent- und Rechtsanwaltspartnerschaft mbB
(86) International application number: PCT/JP2023/008083
(87) International publication number: WO 2023/176516

(56) References cited:
- WO-A1-2013/084634
- WO-A1-2013/084634
- JP-A- 2005 113 735
- JP-A- 2012 087 753
- JP-A- 2016 142 205
- JP-B1- 5 880 789
- JP-B1- 5 880 789
- US-A1- 2008 193 292
- US-A1- 2011 110 789
- US-A1- 2013 098 651
- US-A1- 2019 162 171

## Description

### TECHNICAL FIELD

The present invention relates to a receptor for measures against lightning strike which is used at a blade of a wind power generation device (a wind power generator) .

### BACKGROUND ART

According to increase in size of a wind power generation device in recent years, occurrences of damage by lightning strike to the wind power generation device have been reported, in particular, occurrences of damage by lightning strike to a blade, which passes through the highest point of the wind power generation device, have been reported more.

For instance, there is a case where lightning strike is trapped while a lightning current is conducted from a receptor at a tip of the blade to a down conductor, and blade penetration damage occurs. In this case, if a contact resistance increases due to corrosion of a contact point of the down conductor, melting and erosion due to heat generation caused by the lightning current might occur inside the blade, and there is a risk that breakage of wire or a steam explosion may be induced.

Therefore, in Patent Document 1, by using a tip unit in which a conductor from an inside of the blade tip to the down conductor is insulated, lightning damage is suppressed. Further, in Patent Document 2, by forming a lightning receiving protrusion at a lightning receptor at the blade tip, the function of trapping lightning is increased, thereby preventing lightning from being received at a boundary between the blade and the lightning receptor. Another background art lightning receptor is disclosed in US 2013/098651 A1.

### CITATION LIST

### PATENT DOCUMENT

Patent Document 1: Japanese Patent No. 6467050
Patent Document 2: Japanese Patent No. 5158730
Patent Document 3: Japanese Patent No. 5880789
Patent Document 4: WO2013/084634 A1

### SUMMARY OF THE INVENTION

When lightning strikes the wind power generation device, the lightning current generally flows from a lightning receiving component of the blade, i.e. the receptor, to the ground through the conductor along a route of a hub, a spindle and a tower. At this time, since the receptor fixed to the blade tip is affected by a centrifugal force, it is desirable to reduce weight of the receptor.

However, although the tip unit of Patent Document 1 can be replaced, since a conductive bushing (see Fig. 7 in Patent Document 1) is necessary to connect an outer periphery and an inner periphery, a component count increases, and this may not be suitable for reduction in weight. Further, as for Patent Document 2 as well, since the lightning receiving structure of Patent Document 2 is required to provide the lightning receiving protrusion, a component count increases, and the weight may not be reduced.

The present invention was made to solve such conventional problems, and an object of the present invention is to reduce the weight of the receptor used for measures against lightning strike on the blade of the wind power generation device.
(1) A receptor for a blade of a wind power generation device of the present invention, the wind power generation device having the blades that rotate by receiving wind and form a rotor, wherein the receptor is fixed to a tip of each blade, and a hollow portion is formed inside the receptor.
(2) As one aspect of the present invention, the receptor for the blade of the wind power generation device comprises: a receptor body made of composite alloy; and the hollow portion formed inside the receptor body, wherein the receptor body is made of the composite alloy comprised of a Cu phase in which a heat-resistant element selected from Mo, W, Ta, Nb, V and Zr and a solid solution particle phase of Cr are uniformly dispersed, the composite alloy contains, in weight ratio relative to the composite alloy, 20 to 70% of Cu, and 1.5 to 64% of Cr, and the remainder is comprised of inevitable impurities, and the solid solution particles contained in the composite alloy have an average particle diameter of 20um or less, and are uniformly dispersed in the Cu phase with a dispersion state index of 1.0 or less.
(3) As another aspect of the present invention, the receptor body is fixed to a blade side with a bolt, the receptor body is provided with a cutout portion formed as an entrance into the hollow portion, and the bolt can be fastened to and unfastened from the blade side from an inside of the hollow portion.
(4) As a further aspect of the present invention, the bolt is made of the composite alloy.
(5) As a still further aspect of the present invention, a head portion and a shaft portion body of the bolt are made of the composite alloy, and a thread of a shaft portion of the bolt is made of titanium alloy.

According to the present invention described above, it is possible to reduce the weight of the receptor that suppresses damage by lightning strike to the blade of the wind power generation device.

### BRIEF DESCRIPTION OF THE DRAWINGS

Fig. 1 is a perspective view showing a receptor according to an embodiment 1.
Fig. 2(a) is a perspective view showing a longitudinal cross section of the same receptor. Fig. 2(b) is a perspective view showing the same receptor. Fig. 2(c) is a local sectional view of Fig. 1. Fig. 2(d) is a longitudinal cross section of the same receptor.
Fig. 3 is a cross section showing a result of an erosion comparison test of tungsten alloy.
Fig. 4 is a cross section showing a result of an erosion comparison test of composite alloy of the embodiment 1.
Fig. 5 is a local longitudinal cross section of a conductive bolt of an embodiment 2.
Fig. 6 is a front view of a wind power generation device.
Fig. 7 is a local sectional view of a blade.

### EMBODIMENTS FOR CARRYING OUT THE INVENTION

A receptor for a blade of a wind power generation device according to embodiments of the present invention will be described below. As mentioned above, this receptor is used as measures against lightning strike on the blade of the wind power generation device (as measures to protect the blade of the wind power generation device) .

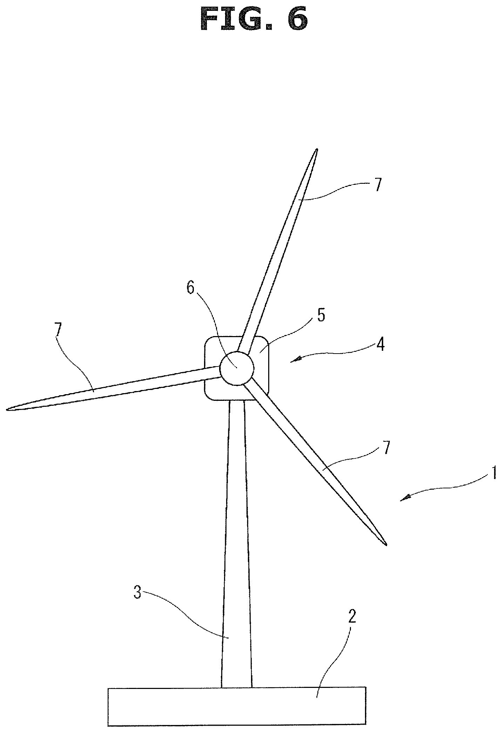

The wind power generation device will be roughly described with reference to Fig. 6. The wind power generation device 1 is constructed mainly by a base (or a foundation) 2 installed on the ground or on the ocean, a tower 3 installed on the base 2 and a rotor 4 rotatably installed at a top of the tower 3.

The rotor 4 has a nacelle 5 at the top of the tower 3, a hub 6 fixed to a rotatable spindle (not shown) provided inside the nacelle 5 and a plurality of blades 7 fixed to the hub 6.

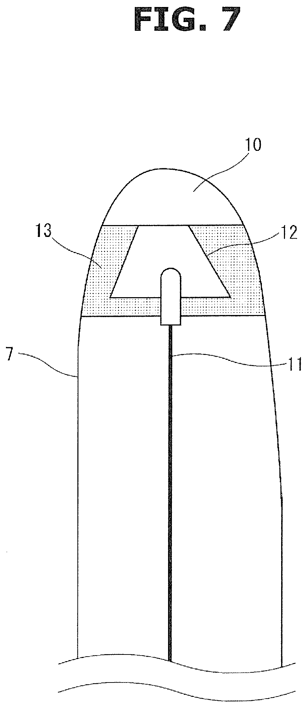

As illustrated in Fig. 7, the receptor 10 as a lightning protection device is fixed to a tip of each blade 7. The receptor 10 is electrically connected to the base 2, which serves as a ground electrode, through a down conductor 11.

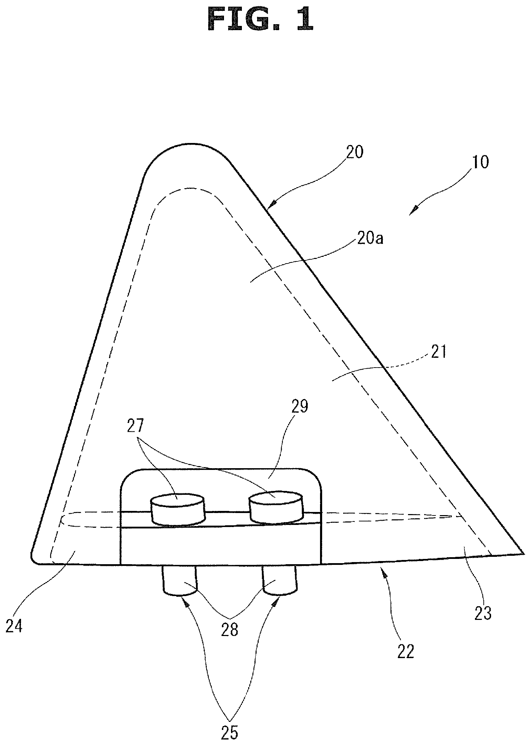

Therefore, when lightning strikes the receptor 10, a lightning current is conducted to the ground electrode (the base 2) through the down conductor 11. This down conductor 11 is fixed to a wedge-shaped receptor anchor 12, and the receptor 10 is secured to the receptor anchor 12 with an adhesive 13 and bolts 25 (see Fig. 1). The adhesive 13 fills a gap between the receptor anchor 12 and the blade 7.

Regarding the receptor 10, since the receptor 10 is subject to a centrifugal force when the blades 7 rotate, aluminum alloy, which is lightweight and has excellent workability, has been used conventionally. However, in the wind power generation device 1, a distance from each blade 7 to thunder cloud is shorter than that from a structure such as the nacelle 5 to the thunder cloud, and thus the blade 7 is subjected to great damage by lightning strike.

As a consequence, there is a risk that expensive repair costs will be incurred. A lightweight receptor 10 having high lightning resistance is thus desired. In order to realize this point, the receptors 10 according to embodiments 1 and 2 are proposed.

### Embodiment 1

The embodiment 1 of the receptor 10 will be described with reference to Figs. 1 to 4. The receptor 10 in the present embodiment is molded into a hollow structure by a casting mold etc. in order to realize weight reduction.

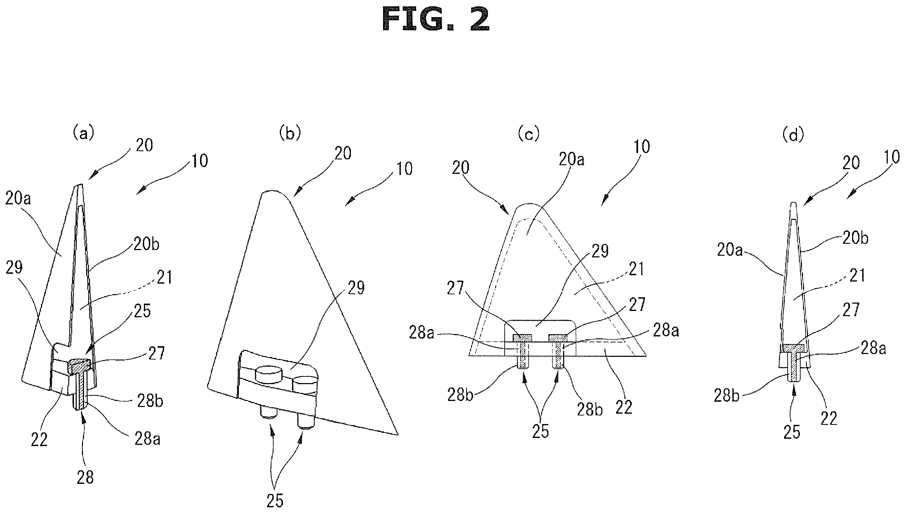

As illustrated in Figs. 1 and 2, the receptor 10 is formed so that a hollow portion 21 is formed inside a receptor body 20. This receptor body 20 has a pair of side portions 20a and 20b (see Figs. 2(a) and 2(d)) and a bottom portion 22 formed at the receptor anchor 12 side, which are formed into a substantially triangular shape.

The hollow portion 21 is formed into a substantially similar shape (but smaller in size) to the receptor body 20. The hollow portion 21 is formed in a region from an inside tip of the receptor body 20 to the bottom portion 22. The bottom portion 22 is provided with a pair of insertion holes (not shown). The side portion 20a is provided with a cutout portion (a cutout space) 29 as an entrance into the hollow portion 21.

It is therefore possible to dispose a shaft portion 28 of each bolt 25 in the hollow portion 21 from the cutout portion 29 and insert the shaft portion 28 into the insertion hole. With this, the shaft portion 28 can be fastened to (screwed into) a female threaded hole (not shown) of the receptor anchor 12 from the hollow portion 21. Further, when replacing the receptor 10, it is possible to unfasten (unscrew) the bolt 25 from the inside of the hollow portion 21.

The receptor body 20 is molded using composite alloy (composite metal) described in Patent Document 3 as receptor material. This composite alloy is comprised of a Cu (copper) phase in which a heat-resistant element selected fromMo (molybdenum), W (tungsten), Ta (tantalum), Nb (niobium), V (vanadium) and Zr (zirconium) and a solid solution particle phase of Cr (chromium) are uniformly dispersed.

The composite alloy in this case contains, in weight ratio relative to the composite alloy, "Cu = 20 to 70%" and "Cr = 1.5 to 64%", and the remainder is comprised of inevitable impurities. Further, the solid solution particles contained in the composite alloy have an average particle diameter of 20um or less, and are uniformly dispersed in the Cu phase with a dispersion state index of 1.0 or less. According to the receptor 10 of the present embodiment described above, the following effects can be obtained.
(1) Because of the hollow structure formed by the hollow portion 21, it is possible to realize weight reduction as compared with a conventional product that employs a solid structure. That is, although the composite alloy has larger mass than that of aluminum alloy, by employing the hollow structure, weight reduction can be achieved, thereby reducing an influence of the centrifugal force of the blades 7.

In addition, because of the lightweight type, it is possible to easily perform receptor replacement work which is performed while being suspended in the air, thereby improving workability. Further, since the cutout portion 29 is formed at the side portion 20a, it is possible to fasten (screw) and unfasten (unscrew) the shaft portion 28 of the bolt 25 to (into) and from the receptor anchor 12 from the inside of the hollow portion 21, thereby easily performing the receptor replacement work.

(2) By using the composite alloy as the receptor material, it is possible to obtain the effect of suppressing erosion loss (melting loss) due to lightning strike as compared with the aluminum alloy.

That is, as a result of performing an erosion comparison test (reference, IEC 61400-24 Ed. 2.0/D.3) with the cumulative amount 3000 C (600 C × 5 times), it was confirmed that the composite alloy suppresses the erosion loss (the melting loss) due to lightning strike as compared with the aluminum alloy, and that the erosion loss (the melting loss) is as slight as that of tungsten alloy.

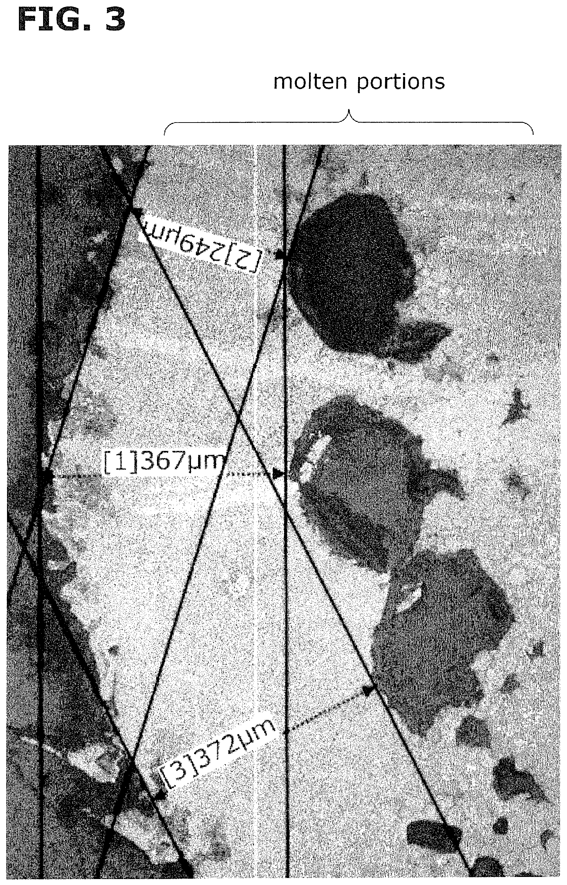

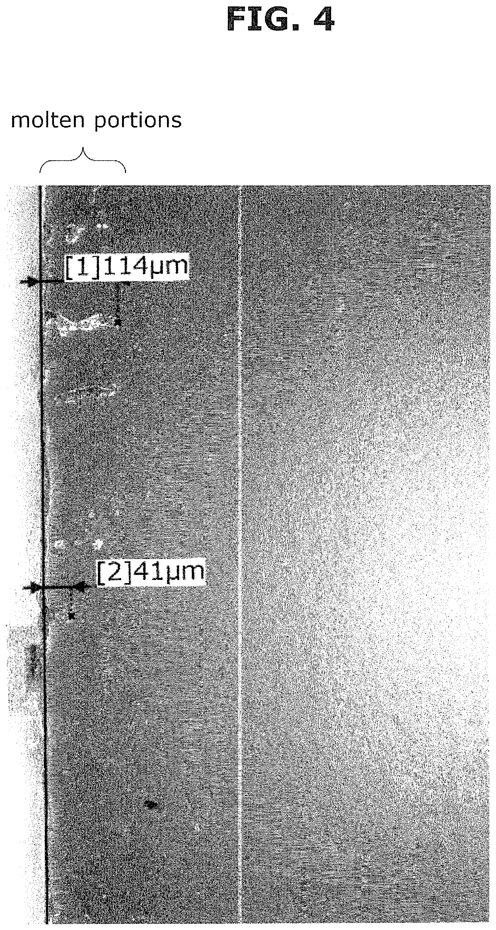

Figs. 3 and 4 illustrate results of erosion comparison tests of a comparative example (tungsten alloy/W alloy × 300) and the composite alloy. More specifically, when cross-sections of molten portions of the both alloys were examined by an electron microscope, it was found that melting of a surface layer portion of the composite alloy was suppressed more than the tungsten alloy.

In other words, by employing the hollow structure, the composite alloy can be selected as the receptor material, then the receptor 10 of the present embodiment enhances the effect of suppressing the erosion loss (the melting loss) due to lightning strike. In this respect, the receptor 10 has high lightning resistance, and can obtain an effect of suppressing damage by the lightning strike to the blades 7.

(3) The composite alloy not only has the effect of suppressing the erosion loss (the melting loss), but is suitable for material of the receptor 10 in terms of mechanical strength and workability.

**[Table 1]**

| **Receptor Material** | **tensile strength** [MPa] (0. 2%) | **material hardness** [HV] |
|---|---|---|
| **aluminum alloy** | 263 (225) | <100 |
| **tungsten alloy** | 1024(665) | 347 |
| **composite alloy** (PP5880789) | 671 (477) | 276 |

Table 1 shows a result of comparison tests on tensile strength and material hardness of the aluminum alloy, the tungsten alloy and the composite alloy. According to this comparison test result, it was confirmed that the composite alloy was superior to the aluminum alloy in the tensile strength, and was softer than the tungsten alloy in hardness. As a result, by employing the composite alloy, the receptor 10 of the present embodiment can obtain a higher mechanical strength than that of an aluminum alloy-made receptor and higher workability than that of a tungsten alloy-made receptor.

### Embodiment 2

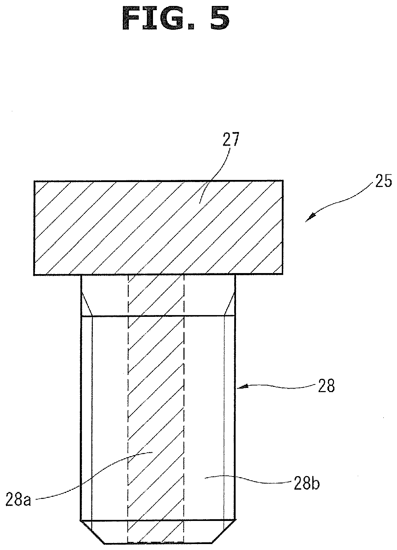

The embodiment 2 of the receptor 10 will be described with reference to Fig. 5. In the present embodiment, the composite alloy is used for the bolt 25 for fixing the receptor 10 to the receptor anchor 12. Hereinafter, the bolt 25 using the composite alloy is referred to as a conductive bolt 25.

More specifically, the composite alloy having high conductivity is used for a head portion 27 and an inside part 28a of the shaft portion 28 of the conductive bolt 25. On the other hand, a thread 28b of the shaft portion 28 is made of titanium alloy (Ti alloy) having high heat resistance and high corrosion resistance (high erosion resistance). The conductive bolt 25 in the present embodiment can be manufactured, for instance, by joining the above components by hot isostatic pressing and by cutting and polishing them.

According to the conductive bolt 25 structured as described above, since a component such as a conductive bushing is not required, a component count decreases, thereby improving workability of maintenance. Further, the conductive bolt 25 can also be used as a side receptor of the blade 7.

Here, in Patent Document 4, in the same manner as the present embodiment, a tip receptor of Patent Document 4 is connected using bolts, and there is concern of breakage, damage or scattering of the bolt due to lightning strike. In contrast to this, the conductive bolt 25 of the present embodiment can conduct a lightning current of the lightning strike to the down conductor 11 side, thereby eliminating the above concern.

### <<Others and Other examples>>

The present invention is not limited to the above embodiments, and can be modified and implemented within the scope of the claims. Some examples are shown below.
(1) Since the receptor body 20 of the embodiment 1 employs the hollow structure, not only the composite alloy, but also metal having large mass such as tungsten alloy can be used as the receptor material. In this case, such metal can be used as a substitute for the composite alloy in consideration of influence by the centrifugal force etc. in design.
(2) The shape of the hollow portion 21 is not limited to the substantially similar shape to the receptor body 20. The hollow portion 21 could be formed only at the bottom portion 22 side, and the tip side of the receptor body 20 could be formed into a solid body. Further, the hollow portion 21 may be formed at the tip side of the receptor body 20 and the bottom portion 22 side, and a portion between both these sides may be formed into a solid body. In addition, the hollow portion 21 might be formed into a honeycomb structure (a porous structure) .
(3) The bolt 25 is not limited to a round head bolt shown in Figs. 1 and 2, but, for instance, a hexagon head bolt or a turn back bolt could be used. In a case where the turn back bolt is used, a male screw in one direction formed at one end portion side of the turn back bolt is screwed into a female threaded hole of the bottom portion 22, and a male screw in the other direction formed at the other end portion side of the turn back bolt is screwed into a female threaded hole of the receptor anchor 12, then the receptor 10 is fixed.
   Here, a fixing position(s) of the bolt (s) 25 is not limited to a middle portion of the bottom portion 22 which is shown in Figs. 1 and 2. For instance, the fixing positions may be both end portions 23 and 24 of the bottom portion 22.
(4) Regarding the conductive bolt 25 in the embodiment 2, the thread 28b of the shaft portion 28 could be made of the aforementioned composite alloy instead of the titanium alloy. In this case, since the entire conductive bolt 25 is made of the composite alloy, both of the receptor 10 and the conductive bolt 25 are made of the same material, thereby reducing influence of electric corrosion (electric erosion). Here, the conductive bolt 25 is not limited to a round head bolt, but, for instance, a hexagon head bolt or a turn back bolt could be used.
(5) It is noted that the receptor body 20 could be provided, at the tip portion thereof, with a drain hole for draining water. Further, in order to suppress damage to the bolt 25, the head portion 27 may be fixed with an adhesive.

### EXPLANATION OF REFERENCE

1 ··· wind power generation device
2 ··· base
3 ··· tower
4 ··· rotor
5 ··· nacelle
6 ··· hub
7 ··· blade
10 ··· receptor
11 ··· down conductor
20 ··· receptor body
20a, 20b ··· side portions
21 ··· hollow portion
22 ··· bottom portion
23, 24 ··· both end portions
25 ··· bolt, conductive bolt
27 ··· head portion
28 ··· shaft portion
28a ··· inside part of shaft portion
28b ··· thread of shaft portion
29 ··· cutout portion

## Claims

1. A receptor (10) for a blade (7) of a wind power generation device (1), the wind power generation device (1) having the blades (7) that rotate by receiving wind and form a rotor (4), wherein
the receptor (10) is fixed to a tip of each blade (7), and
a hollow portion (21) is formed inside the receptor (10),
the receptor (10) comprising:
a receptor body (20) made of composite alloy; and
the hollow portion (21) formed inside the receptor body (20),
wherein the receptor body (20) is made of the composite alloy comprised of a Cu phase in which a heat-resistant element selected from Mo, W, Ta, Nb, V and Zr and a solid solution particle phase of Cr are uniformly dispersed,
the composite alloy contains, in weight ratio relative to the composite alloy,
20 to 70% of Cu, and
1.5 to 64% of Cr, and
the remainder is comprised of inevitable impurities, and
the solid solution particles contained in the composite alloy have an average particle diameter of 20µm or less, and are uniformly dispersed in the Cu phase with a dispersion state index of 1.0 or less, and
the receptor body (20) is fixed to a blade (7) side with a bolt (25),
the receptor body (20) is provided with a cutout portion (29) formed as an entrance into the hollow portion (21), and
the bolt (25) can be fastened to and unfastened from the blade (7) side from an inside of the hollow portion (21) .

2. The receptor (10) for the blade (7) of the wind power generation device (1) as claimed in claim 1, wherein
the bolt (25) is made of the composite alloy.

3. The receptor (10) for the blade (7) of the wind power generation device (1) as claimed in claim 2, wherein
a head portion (27) and a shaft portion body (28) of the bolt (25) are made of the composite alloy, and
a thread (28b) of a shaft portion (28) of the bolt (25) is made of titanium alloy.

4. A side receptor conductive bolt (25) of a blade (7) of a wind power generation device (1), the side receptor conductive bolt (25) using composite alloy comprised of a Cu phase in which a heat-resistant element selected from Mo, W, Ta, Nb, V and Zr and a solid solution particle phase of Cr are uniformly dispersed, wherein
the composite alloy contains, in weight ratio relative to the composite alloy,
20 to 70% of Cu, and
1.5 to 64% of Cr, and
the remainder is comprised of inevitable impurities, and
the solid solution particles contained in the composite alloy have an average particle diameter of 20µm or less, and are uniformly dispersed in the Cu phase with a dispersion state index of 1.0 or less.

5. The side receptor conductive bolt (25) of the blade (7) of the wind power generation device (1) as claimed in claim 4, wherein
the composite alloy is used for a head portion (27) and a shaft portion body (28) of the side receptor conductive bolt (25), and
titanium alloy is used for a thread (28b) of a shaft portion (28) of the side receptor conductive bolt (25) .

## Patentansprüche

1. Rezeptor (10) für einen Flügel (7) einer Windkraftanlage (1), wobei die Windkraftanlage (1) die Flügel (7) aufweist, die sich durch den Wind drehen und einen Rotor (4) bilden, wobei
der Rezeptor (10) an einer Spitze jedes Flügels (7) befestigt ist und
ein Hohlraum (21) im Inneren des Rezeptors (10) ausgebildet ist,
wobei der Rezeptor (10) umfasst:
einen Rezeptorkörper (20) aus einer Verbundlegierung; und
den Hohlraum (21), der im Inneren des Rezeptorkörpers (20) ausgebildet ist,
wobei der Rezeptorkörper (20) aus der Verbundlegierung besteht, die aus einer Cu-Phase, in der ein hitzebeständiges Element, ausgewählt aus Mo, W, Ta, Nb, V und Zr, und eine Festlösungspartikelphase aus Cr gleichmäßig verteilt sind, besteht,
wobei die Verbundlegierung, bezogen auf das Gewichtsverhältnis der Verbundlegierung,
20 bis 70 % Cu und
1,5 bis 64 % Cr, und
der Rest besteht aus unvermeidbaren Verunreinigungen, und
die in der Verbundlegierung enthaltenen Feststofflösungspartikel einen durchschnittlichen Partikeldurchmesser von 20 µm oder weniger aufweisen und in der Cu-Phase mit einem Dispersionszustandsindex von 1,0 oder weniger gleichmäßig verteilt sind, und
der Rezeptorkörper (20) mit einem Bolzen (25) an einer Seite des Flügels (7) befestigt ist,
der Rezeptorkörper (20) mit einem Ausschnitt (29) versehen ist, der als Eingang in den Hohlraum (21) ausgebildet ist, und
der Bolzen (25) von der Innenseite des Hohlraums (21) aus an der Seite des Flügels (7) befestigt und von dieser gelöst werden kann.

2. Rezeptor (10) für den Flügel (7) der Windkraftanlage (1) nach Anspruch 1, wobei
der Bolzen (25) aus einer Verbundlegierung besteht.

3. Rezeptor (10) für den Flügel (7) der Windkraftanlage (1) gemäß Anspruch 2, wobei
ein Kopfabschnitt (27) und ein Schaftabschnittkörper (28) des Bolzens (25) aus der Verbundlegierung bestehen und
ein Gewinde (28b) eines Schaftabschnitts (28) des Bolzens (25) aus einer Titanlegierung besteht.

4. Seitlicher Rezeptor-Leitungsbolzen (25)
eines Flügels (7) einer Windkraftanlage (1), wobei der seitliche Rezeptor-Leitungsbolzen (25) eine Verbundlegierung verwendet, die eine Cu-Phase, in der ein aus Mo, W, Ta, Nb, V und Zr ausgewähltes hitzebeständiges Element und eine Festlösungspartikelphase aus Cr gleichmäßig verteilt sind, umfasst, wobei
die Verbundlegierung in Gewichtsverhältnis zur Verbundlegierung
20 bis 70 % Cu und
1,5 bis 64 % Cr enthält und
der Rest aus unvermeidbaren Verunreinigungen besteht, und
die in der Verbundlegierung enthaltenen Festlösungspartikel einen durchschnittlichen Partikeldurchmesser von 20 µm oder weniger aufweisen und in der Cu-Phase mit einem Dispersionszustandsindex von 1,0 oder weniger gleichmäßig verteilt sind.

5. Der seitliche Rezeptor-Leitungsbolzen (25) des Flügels (7) der Windkraftanlage (1) gemäß Anspruch 4, wobei
die Verbundlegierung für einen Kopfabschnitt (27) und einen Schaftabschnittkörper (28) des seitlichen Rezeptor-Leitungsbolzens (25) verwendet wird und
eine Titanlegierung für ein Gewinde (28b) eines Schaftabschnitts (28) des seitlichen Rezeptor-Leitungsbolzens (25) verwendet wird.

## Revendications

1. Récepteur (10) pour une pale (7) d'un dispositif de production d'énergie éolienne (1), le dispositif de production d'énergie éolienne (1) comportant les pales (7) qui tournent en recevant le vent et forment un rotor (4), dans lequel
le récepteur (10) est fixé à une extrémité de chaque pale (7), et
une partie creuse (21) est formée à l'intérieur du récepteur (10),
le récepteur (10) comprenant :
un corps de récepteur (20) en alliage composite ; et
la partie creuse (21) formée à l'intérieur du corps de récepteur (20),
dans lequel le corps de récepteur (20) est constitué de l'alliage composite comprenant une phase Cu dans laquelle un élément résistant à la chaleur choisi parmi Mo, W, Ta, Nb, V et Zr et une phase de particules en solution solide de Cr sont uniformément dispersés,
l'alliage composite contenant, en rapport pondéral par rapport à l'alliage composite,
20 à 70 % de Cu, et
1,5 à 64 % de Cr, et
le reste étant constitué d'impuretés inévitables, et
les particules de solution solide contenues dans l'alliage composite ont un diamètre moyen de particule de 20 µm ou moins et sont uniformément dispersées dans la phase Cu avec un indice d'état de dispersion de 1,0 ou moins, et
le corps de récepteur (20) est fixé à un côté de la pale (7) à l'aide d'un boulon (25),
le corps de récepteur (20) est muni d'une partie découpée (29) formée comme une entrée dans la partie creuse (21), et
le boulon (25) peut être fixé et détaché du côté de la pale (7) depuis l'intérieur de la partie creuse (21).

2. Récepteur (10) pour la pale (7) du dispositif de production d'énergie éolienne (1) selon la revendication 1, dans lequel
le boulon (25) est fabriqué à partir d'un alliage composite.

3. Récepteur (10) pour la pale (7) du dispositif de production d'énergie éolienne (1) selon la revendication 2, dans lequel
une partie de tête (27) et un corps de partie de tige (28) du boulon (25) sont constitués de l'alliage composite, et
un filetage (28b) d'une partie de tige (28) du boulon (25) est constitué d'un alliage de titane.

4. Boulon conducteur de récepteur latéral (25) d'une pale (7) d'un dispositif de production d'énergie éolienne (1), le boulon conducteur de récepteur latéral (25) utilisant un alliage composite composé d'une phase Cu dans laquelle un élément résistant à la chaleur choisi parmi Mo, W, Ta, Nb, V et Zr et une phase de particules en solution solide de Cr sont uniformément dispersés, dans lequel
l'alliage composite contient, en rapport pondéral par rapport à l'alliage composite,
20 à 70 % de Cu, et
1,5 à 64 % de Cr, et
le reste étant constitué d'impuretés inévitables, et
les particules de solution solide contenues dans l'alliage composite ont un diamètre moyen de particule de 20 µm ou moins et sont uniformément dispersées dans la phase Cu avec un indice d'état de dispersion de 1,0 ou moins.

5. Boulon conducteur de récepteur latéral (25) de la pale (7) du dispositif de production d'énergie éolienne (1) selon la revendication 4, dans lequel
l'alliage composite est utilisé pour une partie de tête (27) et un corps de partie de tige (28) du boulon conducteur de récepteur latéral (25), et
un alliage de titane est utilisé pour un filetage (28b) d'une partie de tige (28) du boulon conducteur de récepteur latéral (25).
